# EUROPEAN PATENT APPLICATION

(11) **EP 4 035 818 A1**
(43) Date of publication of application: **03.08.2022**
(21) Application number: 20868047.0
(22) Date of filing: 25.08.2020
(51) Int. Cl.: B23K 26/00

(54) **LASER PROCESSING MONITORING METHOD, AND LASER PROCESSING MONITORING DEVICE**

(30) Priority: 25.09.2019 JP 2019173983
(71) Applicant: Amada Weld Tech Co., Ltd., Isehara-shi Kanagawa 259-1196 (JP); AMADA CO., LTD., Isehara-shi Kanagawa 259-1196 (JP)
(72) Inventor: YANASE, Atsushi, Isehara-shi Kanagawa 259-1196 (JP); NISHIZAKI, Yusuke, Isehara-shi Kanagawa 259-1196 (JP); WATANABE, Haruhiko, Isehara-shi Kanagawa 259-1196 (JP); SHINO, Junichi, Isehara-shi Kanagawa 259-1196 (JP)
(74) Representative: Grünecker Patent- und Rechtsanwälte PartG mbB
(86) International application number: PCT/JP2020/031991
(87) International publication number: WO 2021/059825

(57) **Abstract**

The present laser processing monitoring device is a monitoring device of a laser processing machine that performs desired laser processing by irradiating a given metal-based workpiece W with a laser beam LB and melting the workpiece W by means of laser energy, and includes a laser oscillator 10, a laser power supply 12, a controller 14, a guide beam generation unit 15, delivery optical fibers 16 and 17, a head 18 (an emission unit 24 and a sensor unit 26), an operation panel 20, and a monitoring unit 25. The monitoring unit 25 is a laser monitoring device in the present embodiment, and is configured to mainly include the controller 14, the operation panel 20, a sensor signal processing unit 22, the sensor unit 26, and the like.

## Description

### Technical Field

The present disclosure relates to a laser processing monitoring method and a laser processing monitoring device for monitoring a quality of laser processing performed by irradiating a workpiece with a laser beam to melt the workpiece by means of laser energy.

### Background Art

Conventionally, in the field of laser welding, as a monitoring method for performing quality control of welding processing, there have been used a method in which a melting state in the vicinity of a processing point of a workpiece is photographed for image analysis by an image pickup device such as an electronic camera so as to perform quality determination of welding and a method in which a reflected beam (a radiation beam) from the vicinity of a processing point of a workpiece is received by a photoelectric conversion element such as a photodiode and an output signal of the photoelectric conversion element is subjected to predetermined signal processing so as to perform quality determination.

The monitoring method of image analysis by using the image pickup device has an advantage in that it is easy to grasp the quality of welding at a glance because the shape of a molten pool is directly observed as an image, but the cost of hardware and software is high. In that respect, the monitoring method of signal processing by using the photoelectric conversion element can reduce the cost by making the mechanisms of hardware and software relatively simple. This monitoring method includes a method in which radiation energy is converted into a temperature by a radiation thermometer incorporating the photoelectric conversion element so as to display the converted temperature and a method in which an integrated value or an average value per one pulse is calculated by an integration circuit or an average value arithmetic calculation circuit with respect to an output signal of the photoelectric conversion element, that is, a light intensity of a reflected beam (a radiation beam) and the integrated value or the average value is compared with a threshold value by a comparison circuit so as to perform quality determination (Patent Literature 1).

### Citation List

### Patent Literature

Patent Literature 1: Japanese Patent Application Laid-Open Publication No. 2010-110796

### Summary

Of the monitoring methods of signal processing by using the photoelectric conversion element, the method in which the temperature in the vicinity of the processing point is measured and displayed by the radiation thermometer can determine whether or not the workpiece has been melted by comparing the measured temperature with a melting point. However, it is not possible to capture even a subtle behavior or a dynamic change of a melting portion. Therefore, accuracy and reliability of the monitoring are low.

Further, in the method in which the integrated value or the average value per one pulse with respect to the light intensity of the reflected beam (the radiation beam) is compared with the threshold value, the reflected beam (the radiation beam) is not highly collated with the melting state and the integrated value or the average value per one pulse does not accurately reflect a dynamic change of a melting portion. As a result, also in this method, accuracy and reliability of the monitoring are not high.

The present disclosure solves the above-mentioned problems of the prior art, and provides a laser processing monitoring method and a laser processing monitoring device that enable detailed monitoring with excellent accuracy, reliability, and cost effectiveness for laser processing accompanied by melting of a workpiece.

A laser processing monitoring method according to a first aspect of the present disclosure is a laser processing monitoring method of monitoring a quality of laser processing performed by irradiating a workpiece with a laser beam under a set processing condition to melt the workpiece by means of laser energy, the laser processing monitoring method including (1) receiving a radiation beam generated from a vicinity of a processing point of the workpiece during irradiation of the laser beam, (2) generating an analog sensor output signal representing an intensity of an infrared ray in a predetermined wavelength band included in the radiation beam, (3) converting a waveform of the sensor output signal into digital waveform data without compromising an intensity change, (4) setting a reference waveform in advance for the sensor output signal in correspondence to the processing condition, (5) setting, for the reference waveform, in an arbitrary section on a time axis, a first monitoring range having a first offset value as a limit value and a second monitoring range having a second offset value larger than the first offset value as a limit value, (6) applying the first and second monitoring ranges to the waveform of the sensor output signal based on the waveform data of the sensor output signal, (7) inspecting whether the waveform of the sensor output signal is within the first monitoring range, extending out of the first monitoring range but within the second monitoring range, or extending out of the second monitoring range, and (8) performing at least three stages of quality determination on a quality of the laser processing based on a result of the inspection.

A laser processing monitoring device according to the first aspect of the present disclosure is a laser processing monitoring device for monitoring a quality of laser processing performed by irradiating a workpiece with a laser beam under a set processing condition to melt the workpiece by means of laser energy, the laser processing monitoring device including a beam receiving unit configured to receive a radiation beam generated from a vicinity of a processing point of the workpiece during irradiation of the laser beam, photoelectrically convert an infrared ray in a predetermined wavelength band included in the radiation beam, and generate an analog sensor output signal representing an intensity of the radiation beam, a signal processing unit configured to convert a waveform of the sensor output signal into digital waveform data without compromising an intensity change, a reference waveform setting unit configured to set a reference waveform in advance for the sensor output signal in correspondence to the processing condition, a monitoring range setting unit configured to set, for the reference waveform, in an arbitrary section on a time axis, at least a first monitoring range having a first offset value as a limit value and a second monitoring range having a second offset value larger than the first offset value as a limit value, an inspection unit configured to inspect, by applying the first and second monitoring ranges to the waveform of the sensor output signal, whether the waveform of the sensor output signal is within the first monitoring range, extending out of the first monitoring range but within the second monitoring range, or extending out of the second monitoring range, and a determination unit configured to perform at least three stages of quality determination on a quality of the laser processing based on an inspection result obtained from the inspection unit.

In the first aspect, the waveform data of the sensor output signal that finely and faithfully represents the intensity change in the specific wavelength band of the radiation beam radiated from the workpiece during laser processing is acquired. Then, to the waveform of the sensor output signal that can be visualized based on this waveform data, a monitoring period and two monitoring ranges or two types of monitoring ranges respectively having different limit values, which have been set in advance, are applied to inspect which monitoring range the waveform of the sensor output signal is staying in and which monitoring range the waveform of the sensor output signal is extending out of. Since the quality of the laser processing is determined based on the result of the inspection, it is possible to perform a detailed quality evaluation of laser processing based on a subtle behavior or a dynamic change of a melting portion.

A laser processing monitoring method according to a second aspect of the present disclosure is a laser processing monitoring method of monitoring a quality of laser processing performed by irradiating a workpiece with a laser beam under a set processing condition to melt the workpiece by means of laser energy, the laser processing monitoring method including (1) receiving a radiation beam generated from a vicinity of a processing point of the workpiece during irradiation of the laser beam, (2) generating an analog sensor output signal representing an intensity of an infrared ray in a predetermined wavelength band included in the radiation beam, (3) converting a waveform of the sensor output signal into digital waveform data without compromising an intensity change, (4) setting a reference waveform in advance for the sensor output signal in correspondence to the processing condition, (5) setting, for the reference waveform, in an arbitrary section on a time axis, a first monitoring range having a first offset value as a limit value, a second monitoring range having a second offset value larger than the first offset value as a limit value, and a third monitoring range having a third offset value larger than the second offset value as a limit value, (6) applying the first, second, and third monitoring ranges to the waveform of the sensor output signal based on the waveform data of the sensor output signal, (7) inspecting whether the waveform of the sensor output signal is within the first monitoring range, extending out of the first monitoring range but within the second monitoring range, extending out of the second monitoring range but within the third monitoring range, or extending out of the third monitoring range, and (8) performing at least four stages of quality determination on a quality of the laser processing based on a result of the inspection.

A laser processing monitoring device according to the second aspect of the present disclosure is a laser processing monitoring device for monitoring a quality of laser processing performed by irradiating a workpiece with a laser beam under a set processing condition to melt the workpiece by means of laser energy, the laser processing monitoring device including a beam receiving unit configured to receive a radiation beam generated from a vicinity of a processing point of the workpiece during irradiation of the laser beam, photoelectrically convert an infrared ray in a predetermined wavelength band included in the radiation beam, and generate an analog sensor output signal representing an intensity of the radiation beam, a signal processing unit configured to convert a waveform of the sensor output signal into digital waveform data without compromising an intensity change, a reference waveform setting unit configured to set a reference waveform in advance for the sensor output signal in correspondence to the processing condition, a monitoring range setting unit configured to set, for the reference waveform, in an arbitrary section on a time axis, a first monitoring range having a first offset value as a limit value, a second monitoring range having a second offset value larger than the first offset value as a limit value, and a third monitoring range having a third offset value larger than the second offset value as a limit value, an inspection unit configured to inspect, based on the waveform data of the sensor output signal, by applying the first, second, and third monitoring ranges to the waveform of the sensor output signal, whether the waveform of the sensor output signal is within the first monitoring range, extending out of the first monitoring range but within the second monitoring range, extending out of the second monitoring range but within the third monitoring range, or extending out of the third monitoring range, and a determination unit configured to perform at least four stages of quality determination on a quality of the laser processing based on an inspection result obtained from the inspection unit.

In the second aspect, the waveform data of the sensor output signal that finely and faithfully represents the intensity change in the specific wavelength band of the radiation beam radiated from the workpiece during laser processing is acquired. Then, to the waveform of the sensor output signal that can be visualized based on this waveform data, a monitoring period and three pieces or three types of monitoring ranges respectively having different limit values, which have been set in advance, are applied to inspect which monitoring range the waveform of the sensor output signal is staying in and which monitoring range the waveform of the sensor output signal is extending out of. Since the quality of the laser processing is determined based on the result of the inspection, it is possible to perform a more detailed quality evaluation of laser processing based on a subtle behavior or a dynamic change of a melting portion.

According to the laser processing monitoring method or the laser processing monitoring device of one or more embodiments, the configurations and operations as described above enable detailed monitoring with excellent accuracy, reliability, and cost effectiveness for laser processing accompanied by melting of a workpiece.

### Brief Description of Drawings

[Figure 1] Figure 1 is a block diagram showing an entire configuration of a laser processing device according to one or more embodiments of the present disclosure.
[Figure 2] Figure 2 is a graph chart showing a radiation spectral distribution of a black body.
[Figure 3] Figure 3 is a diagram showing a spectral distribution of intensities of infrared rays emitted from a melting portion that is obtained by irradiating a stainless steel with a pulse laser beam.
[Figure 4] Figure 4 is a diagram showing an example of variations in the waveform of a sensor output signal obtained in laser spot welding under the same processing condition.
[Figure 5] Figure 5 is a diagram for describing a statistical procedure used for determining a reference waveform in the one or more embodiments.
[Figure 6] Figure 6 is a diagram showing a setting example of the reference waveform and a monitoring range in the one or more embodiments.
[Figure 7] Figure 7 is a flowchart showing processing procedures of a monitoring unit (particularly a signal processing unit) in the one or more embodiments.
[Figure 8] Figure 8 is a diagram showing an example in which the monitoring ranges are applied to the waveform of the sensor output signal in the one or more embodiments.
[Figure 9A] Figure 9A is a diagram showing a case in which the waveform of the sensor output signal is within a first monitoring range.
[Figure 9B] Figure 9B is a diagram showing a case in which the waveform of the sensor output signal is extending out of the first monitoring range but is within a second monitoring range.
[Figure 9C] Figure 9C is a diagram showing a case in which the waveform of the sensor output signal is extending out of the second monitoring range but within a third monitoring range.
[Figure 9D] Figure 9D is a diagram showing a case in which the waveform of the sensor output signal is extending out of the third monitoring range.
[Figure 10] Figure 10 is a block diagram showing a configuration of a signal processing system in a laser processing monitoring device of the one or more embodiments.

### Description of Embodiments

Hereinafter, preferred embodiments of the present disclosure will be described with reference to the accompanying drawings.

### [Configuration and Operation of the Entire Device]

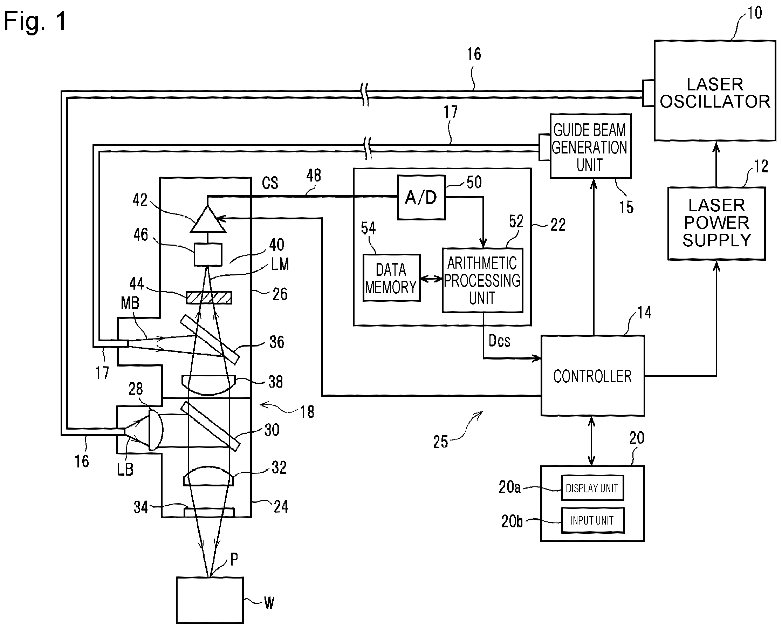

Figure 1 shows the configuration of an entire laser processing device incorporating a laser processing monitoring device according to one or more embodiments of the present disclosure. The laser processing device is configured as a laser processing machine that irradiates a given workpiece W with a CW laser beam or a pulse laser beam LB and melts the workpiece W by means of laser energy to perform desired laser processing or laser melting processing. The laser processing device is configured to include a laser oscillator 10, a laser power supply 12, a controller 14, a guide beam generation unit 15, delivery optical fibers 16 and 17, a head 18, an operation panel 20, and a monitoring unit 25. The monitoring unit 25 is a laser monitoring device in the present embodiment, and is configured to mainly include the controller 14, the operation panel 20, a sensor signal processing unit 22, a sensor unit 26 of the head 18, and the like.

The laser oscillator 10 is composed of, for example, a YAG laser, a fiber laser, or a semiconductor laser. When performing, for example, laser spot welding to the workpiece W, the laser oscillator 10 is supplied with a power or an excitation signal from the laser power supply 12 under the control of the controller 14 so as to oscillate and output a laser beam LB having a wavelength unique to the medium. The laser beam LB oscillated and output by the laser oscillator 10 is delivered to the head 18 via the optical fiber 16.

The head 18 coaxially connects two cylindrical units, that is, an emission unit 24 at a lower part and the sensor unit 26 at an upper part, in two vertical stages, and is installed or arranged so as to face the workpiece W, for example, directly above the workpiece W. The emission unit 24 is optically connected to the laser oscillator 10 via the delivery optical fiber 16, and includes a collimating lens 28, a dichroic mirror 30, an optical lens 32, and a protective glass 34 at their respective predetermined positions in the unit. During laser processing, the laser beam LB propagating in the optical fiber 16 exits in the horizontal direction at a constant spread angle from the end surface of the optical fiber 16 in the emission unit 24, and passes through the collimating lens 28 to become a parallel beam. The beam path thereof is bent vertically downward by the dichroic mirror 30, which makes the beam focused and incident on the vicinity of a processing point P of the metal-based workpiece W through the optical lens 32. Then, the vicinity of the processing point P is melted and solidified by means of laser energy of the laser beam LB to form a welding nugget at that point, where a welded joint is eventually formed. The welded joint may be any weld joint including, for example, a butt joint, a T-shaped joint, an L-shaped joint, a lap joint, or the like, and is selected by a user.

The sensor unit 26 is optically connected to the guide beam generation unit 15 via the delivery optical fiber 17, and includes a dichroic mirror 36, an optical lens 38, an infrared sensor 40, and an amplifier 42 in the unit. The infrared sensor 40 in the present embodiment is configured by arranging, at a prior stage, a wavelength filter or a band pass filter 44 that is behind the dichroic mirror 36, which is exposed to a return beam traveling backward from the workpiece, and passes through only a beam LM having a wavelength in a specific band but blocks beams other than that, and arranging, for example, a photodiode 46 as a photoelectric conversion element at a later stage.

When a guide beam MB, which is a visible ray, propagating in the optical fiber 17 from the guide beam generation unit 15 exits in the horizontal direction at a constant spread angle from the end surface of the optical fiber 17 in the sensor unit 26, the beam path thereof is bent vertically downward by the dichroic mirror 36. Then, the beam irradiates the vicinity of the processing point P of the workpiece W after passing through the optical lens 38, the dichroic mirror 30, the optical lens 32, and the like in the emission unit 24.

On the other hand, during laser processing, electromagnetic waves (radiation beams) having a wavelength in a wide band are radiated from the vicinity of the processing point P of the workpiece W. Among the electromagnetic waves radiated from the workpiece W that are directed vertically upward, a beam that has passed through the optical lens 32 and the dichroic mirror 30 in the emission unit 24 further passes through the optical lens 38 and the dichroic mirror 36 in the sensor unit 26 to enter the band pass filter 44. Then, the beam LM having a wavelength component in a predetermined band that has been selected by and passed through the band pass filter 44 is made incident on a beam receiving surface of the photodiode 46.

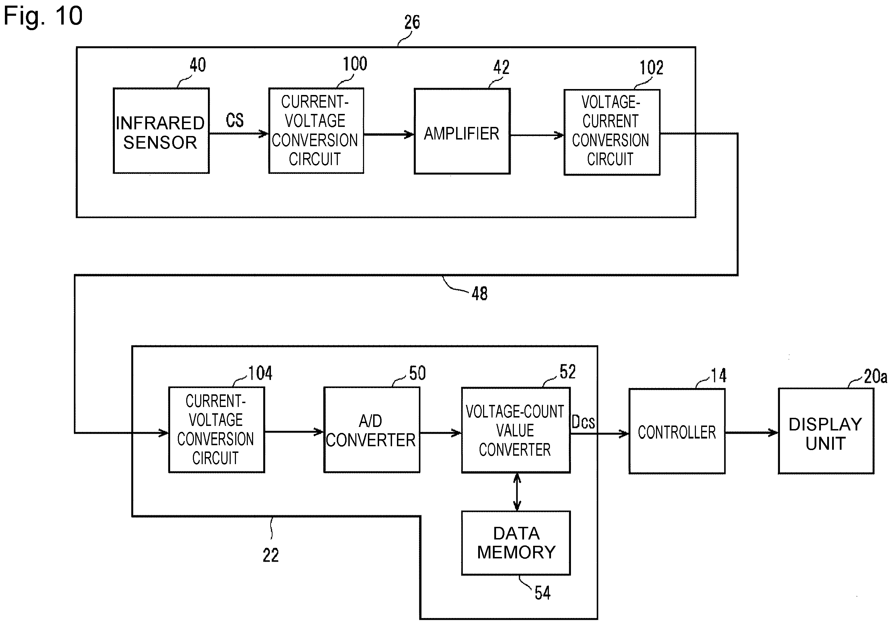

The photodiode 46 photoelectrically converts the received beam LM and generates a sensor output signal CS having a current output. The sensor output signal CS having a current output is converted into a voltage signal by a current-voltage conversion circuit 100 (Figure 10), and then amplified by the amplifier 42 at a gain specified by the controller 14. The sensor output signal CS having a voltage output from the amplifier 42 is converted into a current signal by a voltage-current conversion circuit 102 (Figure 10), which is current-transmitted to the sensor signal processing unit 22 via a sensor cable 48.

In the present embodiment, as the above pass-through wavelength band that is set in the band pass filter 44 of the infrared sensor 40, a band is selected that is most suitable to grasp, as an intensity or a change of radiation energy, the effect of a predetermined factor on the welding characteristics in the vicinity of the processing point for a plurality of types of materials and a wide variety of processing forms that can be selected for the workpiece W, while comprehensively considering sensitivity, versatility, cost effectiveness, and the like in the monitoring method by using the single photodiode 46.

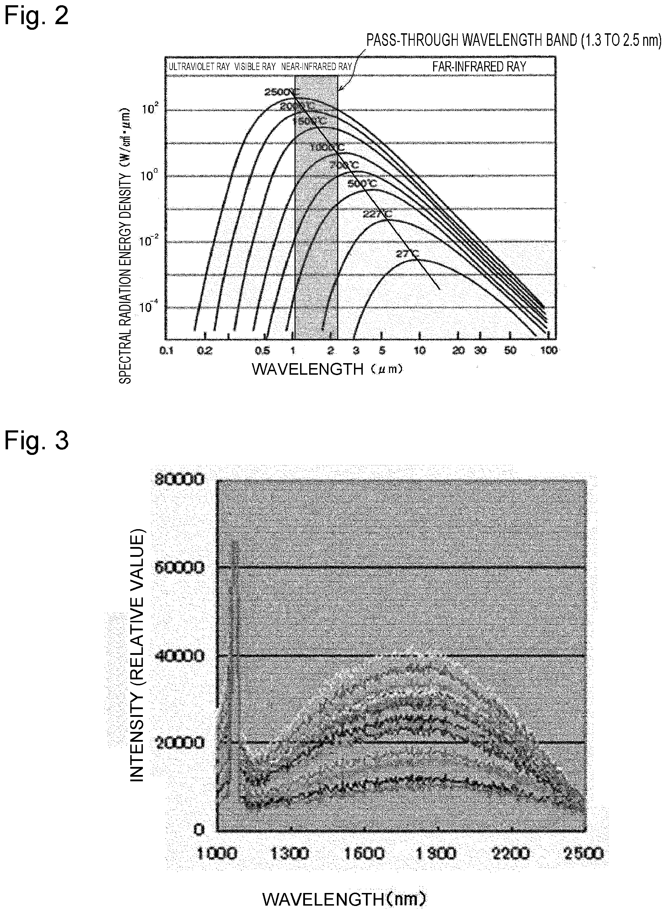

In this regard, the well-known black body radiation spectral distribution as shown in Figure 2 can be preferably used. As shown in the graph of Figure 2, there is a certain relationship between the spectrum of an electromagnetic beam radiated by a black body and the surface temperature thereof. When the temperature of an object is high, the peak of radiation energy shifts to a short wavelength. When the temperature thereof is low, the peak thereof shifts to a long wavelength and the radiation energy at the peak also changes exponentially with the change in temperature. According to this graph, the wavelength of the peak point of the energy density, which is radiated from a black body at a temperature of 1500°C, is about 1800 nm.

On the other hand, Figure 3 shows the results of the analysis of a spectral distribution by a spectrum analyzer after an inventor of the present disclosure measured intensities (relative count values) of beams of 1000 nm or more, which are detected when irradiating a ferrous stainless steel (having a melting point of about 1500°C) with a laser beam, from various angular positions with respect to the processing point. The waveforms displayed by the spectrum analyzer show the respective peak values as the relative intensities without temporarily distinguishing the detected intensities of a beam of 1000 nm or more. In the shown waveforms, although the intensities shown by the entire waveforms are different depending on the angular positions at the time of measurement, certain characteristics are obtained. According to this, the intensity (the radiation energy density) of infrared rays emitted from the melting portion of the stainless steel has a steep peak-shaped characteristic over a band of about 1000 nm to 1100 nm and a broad peak-shaped characteristic over a band of about 1200 nm to 2500 nm. Focusing on the latter broad peak-shaped characteristic, the wavelength at the peak point is about 1800 nm, which is approximately close to the wavelength at the peak point of the energy density radiated from the black body at a temperature of 1500°C (about 1800 nm) .

From this, the practically optimum pass-through wavelength band in the monitoring method of the present disclosure that uses a single photodiode 46 can be determined with reference to the graph of Figure 2 by using, as an index, a melting point of each of a plurality of types of metals that can be expected as a material of the workpiece W.

In the present embodiment, since the melting points of ferrous metal, copper-based metal, and aluminum-based metal, which are main materials for laser melting processing, are approximately 1500°C, 1000°C, and 600°C, respectively, the band of 1.3 µm (1300 nm) to 2.5 µm (2500 nm) is used as a pass-through wavelength band of the infrared sensor 40 as shown in Figure 2. A photodiode having a sensitivity completely corresponding to the selected pass-through wavelength band may be used (in which case, a separate filter is not required). However, the photodiode 46 that detects a wider pass-through wavelength band than that may be used. In the latter case, for example, the band pass filter 44 that passes through only a radiation beam in a band of 1300 nm or more may be provided at the front side of the photodiode 46. In the same manner, for a radiation beam in a band of longer than 2500 nm, the band pass filter 44 that passes through only a radiation beam in a band of 2500 nm or less may also be provided. As a result, among the radiation beams from the metal-based material to be welded, in which a correlation is considered to exist between the black body radiation spectral distribution and the spectral radiation energy density shown in Figure 2, all broad peak-shaped portions over a band of 1300 nm to 2500 nm of the metal-based material to be welded, which is shown in Figure 3, can be monitored as specific wavelengths.

The monitoring unit (laser processing monitoring device) 25 in the present embodiment detects all radiation beams generated in the band of 1300 nm to 2500 nm that is the wavelength band suitable to the metal-based material to be processed, and displays the intensities of the detected radiation beams as they are. Therefore, it is possible to detect, with high sensitivity, the energy amount that is actually related to the processed portion and exponentially increases. Furthermore, it is possible to grasp, by means of the waveform obtained by monitoring the radiation beams from the processing point, a difference in material between the materials to be welded, the presence or absence of a minute gap in a welded portion, and a difference in a unit of several tens of watts or in a unit of ten milliseconds on the side of the laser processing machine.

It is also practically possible to set the width of the wavelength band selected by the infrared sensor 40 up to a half-width (1550 nm to 2150 nm), though the accuracy of waveform data D_{SC} of the sensor output signal CS, which is obtained as a result in the sensor signal processing unit 22 to be described later, decreases to some extent.

The sensor output signal CS that has been current-transmitted from the sensor unit 26 to the sensor signal processing unit 22 via the sensor cable 48 is current-voltage converted by a current-voltage conversion circuit 104 (Figure 10) in the first stage in the sensor signal processing unit 22. Then, the sensor output signal CS converted into a voltage signal is converted into a digital signal by an A/D converter 50.

An arithmetic processing unit 52 provided in the sensor signal processing unit 22 is composed of a hardware or middleware arithmetic processing unit capable of performing specific arithmetic processing at high speed, preferably composed of an FPGA (a feed programmable gate array) to convert, by using a data memory 54, an instantaneous voltage value of the sensor output signal CS into a count value (a relative value) that indicates the intensity of the radiation beam and to generate the converted value as digital waveform data Dcs. The generated waveform data D_{CS} is stored in the data memory 54. The arithmetic processing unit 52 displays, based on the waveform data D_{CS}, a waveform of the sensor output signal CS on a display of the monitoring panel 20 via the controller 14. Alternatively, the arithmetic processing unit 52 additionally executes quality determination processing, which will be described later, and displays the determination result together with the waveform of the sensor output signal CS. The controller 14 includes a CPU, a memory, and various interface circuits, and converts the waveform data D_{CS} and the determination result data, which are given by the arithmetic processing unit 52, into a video signal to display images of the waveform of the sensor output signal CS, the determination result information, and the like on the display (a display unit 20a) of the monitoring panel 20.

As described above, the monitoring unit (the laser processing monitoring device) 25 in the present embodiment uses, as a target of monitoring, not a return beam (a reflected beam) of the laser beam emitted during laser processing but the radiation beam at the time when the workpiece itself reaches a melting state, and visualizes the effect of processing on the workpiece by converting a change in the radiation beam amount during processing into a unique count value as an instantaneous integrated value in a specific band without converting the radiation beam into a temperature, and then by displaying the change of the count value over time as a waveform.

The operation panel 20 includes, for example, the display unit 20a composed of a liquid crystal display and an input unit 20b that is a keyboard type or a touch panel type, and displays various setting screens and monitoring screens under the display control of the controller 14. In the present embodiment, as one of the setting screens, it is also possible to display a laser output waveform corresponding to a condition setting value of the pulse laser beam LB on the display of the display unit 20a. As another setting screen, it is also possible to display, on the display of the display unit 20a, a reference waveform R_{CS} of the sensor output signal that is registered after acquired by a statistical procedure as described below. Furthermore, it is also possible to display a plurality of monitoring ranges M₁, M₂, M₃, which is set for the reference waveform Rcs of the sensor output signal, in superposition on the reference waveform Rcs on the display. Further, as one of the monitoring screens, on the display of the display unit 20a, it is also possible to display, together with the determination result of the laser processing quality, the waveforms of the sensor output signals respectively acquired in the infrared sensor 40 and the sensor signal processing unit 22 of the monitoring unit 25 in the actual laser processing.

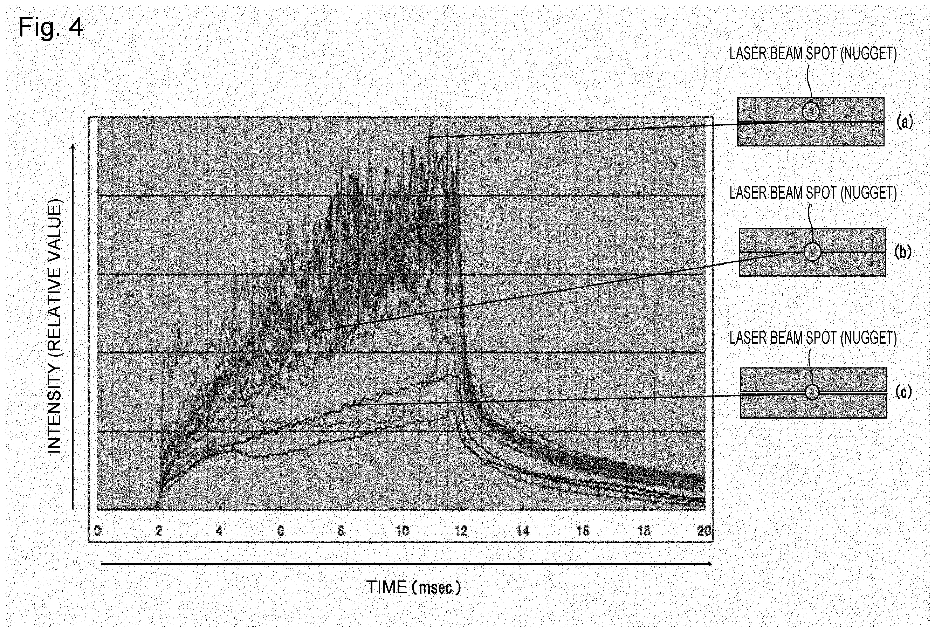

Here, with reference to Figures 4 to 6, a method of setting a reference waveform and a monitoring range in one or more embodiments will be described.

Figure 4 shows an example of variations in the waveform of the sensor output signal CS obtained by the monitoring unit 25 when laser spot welding is performed on a butt joint a multitude of times under the same processing conditions. Normally, as shown in the figure, a normal case (b) in which a butting surface of a workpiece without a gap is irradiated with the pulse laser beam LB and a good welding result obtained is the most common case, and the waveforms (particularly the peak values) of the sensor output signal CS obtained in this normal case are distributed in the vicinity of the center value or the mean value of the normal distribution. However, although the frequency of occurrence is low, a case (a) may occur in which a beam spot of the pulse laser beam LB is deviated from the butting surface of the workpiece and causes a welding failure. In this case, the waveform of the sensor output signal CS shows a peak value that is abnormally higher than the average value. In addition, a case (c) may occur in which a welding failure is caused due to a gap on the butting surface of the workpiece. In this case, the waveform of the sensor output signal CS shows an abnormally low peak value significantly away from the average value.

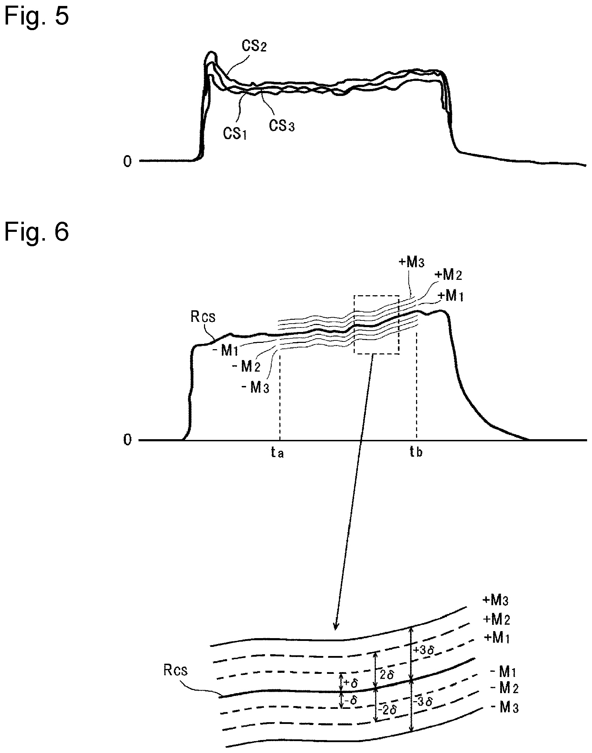

In the present embodiment, the same or equivalent workpiece (sample) is subjected to laser melting processing a plurality of times (for example, 100 times or more) under a certain processing condition selected by the user, so as to acquire a plurality of pieces (preferably 100 pieces or more) of the waveform data Dcs of the sensor output signal CS obtained from the infrared sensor 40 of the monitor 25. Then, as shown in Figure 5, the waveforms of a plurality of sensor output signals CS₁, CS₂, CS₃, and so on acquired by the laser processing of plurality of times are superimposed, and an average value of the waveforms of the sensor output signals CS is obtained, which is defined as the reference waveform R_{SC}, by a statistical procedure, for example, by arithmetic processing of software provided in the monitoring unit 25. Then, this reference waveform R_{SC} is displayed on the setting screen of the operation panel 20, on which the user is allowed to arbitrarily set one or more monitoring ranges each having a different limit value (offset value) on the time axis.

In the present embodiment, when the monitoring unit 25 defines the reference waveform R_{SC}, a statistical standard deviation σ is obtained by arithmetic processing to define three monitoring ranges [-M₁ to +M₁], [-M₂ to +M₂], [-M₃ to +M₃] respectively having, as the limit values (lower limit value and upper limit value) thereof, offset values ±1σ, ±2σ, and ±3σ that are obtained by multiplying the standard deviation σ by ±1, ±2, and ±3, respectively. The user is presented with these offset values. With respect to the reference waveform Rsc, the user only has to select any one or more monitoring periods to which these monitoring ranges [-M₁ to +M₁], [-M₂ to +M₂], and [-M₃ to +M₃] should be applied. For example, the case in which one monitoring period (tₐ to t_{b}) is selected in the middle portion of the pulse period is shown in Figure 6. Note that Figure 6 shows an example in which the limit value lines of the respective monitoring periods [-M₁ to +M₁], [-M₂ to +M₂], and [-M₃ to +M₃] are identified and displayed by using different line types, but a multicolor display method may be used in which the inner first monitoring period [-M₁ to +M₁], the middle second monitoring period [-M₂ to +M₂], and the outside third monitoring period [-M₃ to +M₃] are identified and displayed in blue, yellow, and red, respectively.

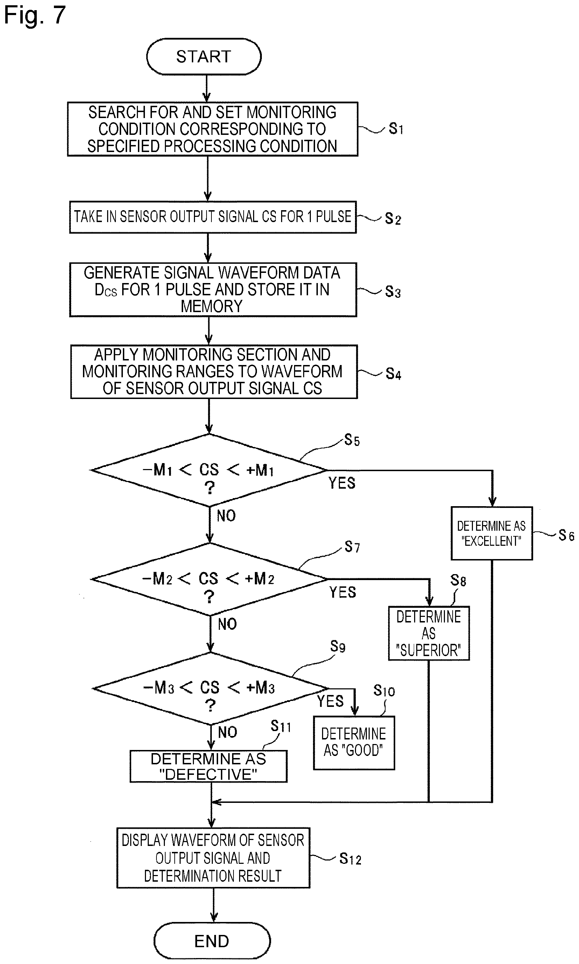

Figure 7 shows a flowchart of processing procedures of the monitoring unit 25 (particularly, the arithmetic processing unit 52 to the controller 14). In the present embodiment, the user specifies a processing condition to be used at this time through the operation panel 20. As to the specified processing condition, as described above, a monitoring condition (the reference waveform, the monitoring range, the monitoring period, and the like) for the sensor output signal CS obtained from the monitoring unit 25 is set in advance, and data (a set value) of the monitoring condition is stored in an internal or external memory, for example, the data memory 54. The controller 14 reads the data of the corresponding monitoring condition from the data memory 54, and sets the data in a register (Step S₁).

Then, when the pulse laser beam LB is oscillated and output under a predetermined condition from the laser oscillator 10 under the control of the controller 14, the pulse laser beam LB is delivered to the emission unit 24 of the head 18 via the optical fiber 16, and focused and emitted to the vicinity of the processing point P of the workpiece W from the emission unit 24. As a result, the vicinity of the processing point P absorbs laser energy of the pulse laser beam LB and melts instantly, and electromagnetic waves of thermal radiation (mainly infrared rays) are emitted from the melting portion thereof. In this thermal radiation, as described above, the beam that has passed through the optical lens 32 and the dichroic mirror 30 in the emission unit 24 and the optical lens 38 and the dichroic mirror 36 in the sensor unit 26 enters the band pass filter 44 of the infrared sensor 40. Then, the beam LM in the specific wavelength band (1300 to 2500 nm) that has passed through the band pass filter 44 is photoelectrically converted by the photodiode 46, and the sensor output signal CS having a current output is generated. The sensor output signal CS is subjected to the analog signal processing as described above (current-voltage conversion, amplification, voltage-current conversion, and current transmission) and is taken into the sensor signal processing unit 22 (step S₂). Then, in the sensor signal processing unit 22, the sensor output signal CS is subjected to the digital signal processing as described above (current-voltage conversion, analog-digital conversion, and voltage-count value conversion), and the waveform data Dcs of the sensor output signal CS is generated. The waveform data Dcs for one pulse is stored in the data memory 54 (step S₃).

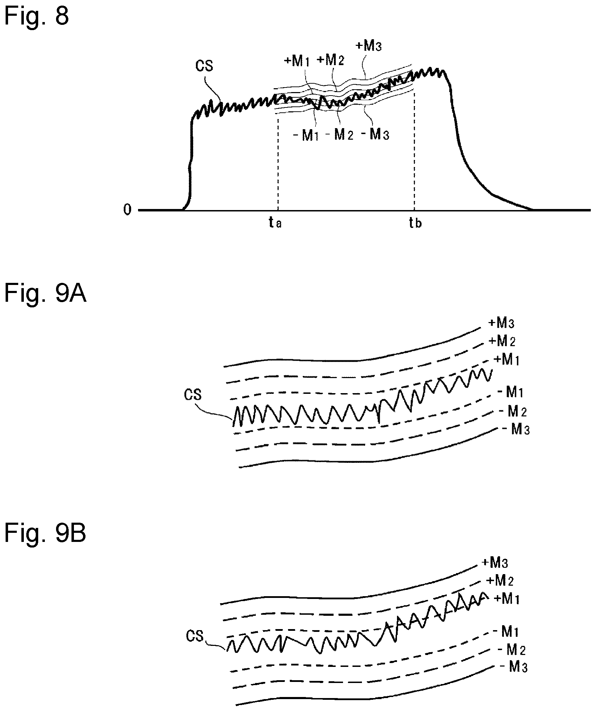

Subsequently, the arithmetic processing unit 52 or the controller 14 reads the signal waveform data Dcs of the sensor output signal CS from the data memory 54, and applies the monitoring period (tₐ to t_{b}) and the three monitoring ranges [-M₁ to +M₁], [-M₂ to +M₂], and [M₃ to +M₃], which have been set in advance, to the waveform of the sensor output signal CS together with the already read data of the monitoring condition, as shown in Figure 8 (Step S₄) .

In this monitoring inspection (Step S₄), when -M₁ < CS < +M₁, that is, when the waveform of the sensor output signal CS consistently stays within the first monitoring range [-M₁ to +M₁] having the smallest limit value (±1σ) in the monitoring period (tₐ to t_{b}) as shown in Figure 9A, the controller 14 determines that the waveform is considerably close to the reference waveform Rcs (Figure 6) and determines that the laser melting processing at this time is outstanding ("excellent") (steps S₅ to S₆).

In the monitoring inspection (Step S₄), when -M₂ < CS < +M₂, that is, when the waveform of the sensor output signal CS extends out of the first monitoring period [-M₁ to +M₁] but stays within the second monitoring range [-M₂ to +M₂] in the monitoring period (ta to t_{b}) as shown in Figure 9B, the controller 14 determines that the waveform is generally close to the reference waveform Rcs and determines that the laser melting processing at this time is generally superior ("superior") (steps S₇ to S₆) .

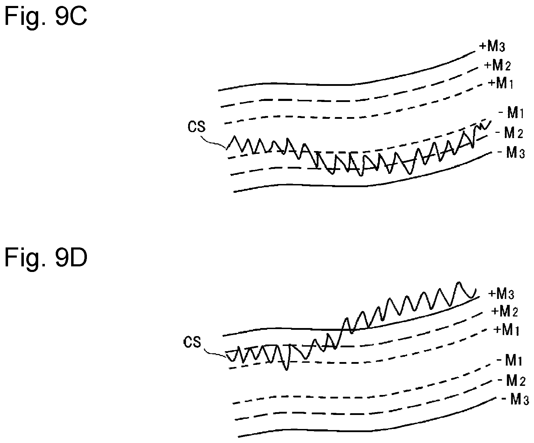

Further, in the monitoring inspection (Step S₄), when -M₃ < CS < +M₃, that is, when the waveform of the sensor output signal CS extends out of the second monitoring period [-M₂ to +M₂] but stays within the third monitoring range [-M₃ to +M₃] in the monitoring period (tₐ to t_{b}) as shown in Figure 9C, the controller 14 determines that the difference or deviation from the reference waveform R_{CS} is still within an allowable range, and determines that the laser melting processing at this time is generally passed ("good") (steps S₉ to S₁₀).

However, in the monitoring inspection (Step S₄), when CS < -M₃ or +M₃ < CS is detected, that is, when the waveform of the sensor output signal CS extends out of the third monitoring range [-M₃ to +M₃] in the monitoring period (tₐ to t_{b}) as shown in Figure 9D, the controller 14 determines that the difference or deviation from the reference waveform R_{CS} exceeds the allowable range, and determines the laser melting processing at this time is not passed ("defective") (steps S₉ to S₁₁).

The above-described determination results obtained by the controller 14 is displayed and output on the display of the display unit 20a together with the waveform of the sensor output signal CS (step S₁₂). Here, a buzzer sound, an alert, or the like may also be used to make it easier to identify the respective determination results.

It is possible for a user at a production site to evaluate a group of workpieces, for which the determination result of "excellent" is obtained, as the one that has been subjected to extremely uniform and high-quality laser melting processing. In addition, it is possible to evaluate a group of workpieces, for which the determination result of "superior" is obtained, as the one that has been subjected to a certain degree of uniform and quality laser melting processing. Further, it is possible to evaluate a group of workpieces, for which the determination result of "good" is obtained, as the one that has been subjected to laser melting processing of uniformity and quality generally within the allowable range. Then, it is possible to evaluate a group of workpieces, for which the determination result of "defective" is obtained, as the one in which an abnormality has occurred during the laser melting processing such as occurrence of sputtering, burn through of a molten pool, deflection and melting of a molten pool, or the like. Furthermore, when the determination result of "defective" is frequently or successively obtained, it is possible to immediately stop the laser melting processing under the same processing condition. In this manner, in the present embodiment, it is possible to finely segment the processing quality of the workpiece subjected to the laser melting processing by the present laser processing device, which enables significant improvement in quality control.

In the present embodiment, the photodiode 46 provided in the sensor unit 26 is composed of a photodiode having high beam receiving sensitivity, for example, a Si photodiode, and generates the sensor output signal CS having a current output that is proportional to the light intensity of the received radiation beam LM. However, since the radiation beam LM is a weak beam, the sensor output signal CS is output also as a weak small signal. Therefore, as described above, the sensor output signal CS is converted into a voltage signal by the current-voltage conversion circuit 100, and then converted by the amplifier 42 into a signal of a size that sufficiently allows reduction of the effect by noise.

However, if this analog sensor output signal CS is transmitted (voltage-transmitted) still in the form of a voltage signal from the sensor unit 26 via the sensor cable 48 to the sensor signal processing unit 22, for example, at a distance of several meters or more, the signal level is greatly attenuated and the waveform is distorted due to voltage drop in the sensor cable 48, and is easily affected by noise. Therefore, the sensor output signal CS is converted into a current signal by the voltage-current conversion circuit 102 in the sensor unit 26, and then is transmitted to the sensor signal processing unit 22 via the sensor cable 48. Such current transmission can suppress the attenuation of the signal, the distortion of the waveform, the effect of noise, and the like. This makes it possible to faithfully transmit the analog sensor output signal CS, which represents the light intensity of the radiation beam LM, from the sensor unit 26 to the sensor signal processing unit 22 at a distance. Furthermore, by applying the digital signal processing as described above in the sensor signal processing unit 22, it is possible to convert the waveform of the sensor output signal CS generated by the photodiode 46 into the digital waveform data Dcs without compromising the intensity change thereof.

In the present embodiment, the waveform data of the sensor output signal CS that finely and faithfully represents the intensity change in the specific wavelength band of the radiation beam radiated from the workpiece during laser processing is acquired. Then, to the waveform of the sensor output signal CS that can be visualized based on this waveform data, the monitoring period (tₐ to t_{b}) and the plurality of the monitoring ranges [-M₁ to +M₁], [-M₂ to +M₂], and [-M₃ to +M₃] respectively having different limit values, which have been set in advance, are applied to inspect which monitoring range the waveform of the sensor output signal is staying in and which monitoring range the waveform of the sensor output signal is extending out of. Since the quality of the laser melting processing is determined based on the inspection result, it is possible to perform a detailed quality evaluation based on a subtle behavior or a dynamic change of the melting portion, which enables significant improvement in quality control.

### [Other Embodiments or Modifications]

Although the one or more preferred embodiments of the present disclosure have been described above, the above-described embodiments do not limit the present disclosure. Those skilled in the art can make various modifications and changes in specific embodiments without departing from the technical concept and scope of the present disclosure.

In the one or more embodiments described above, the three monitoring ranges [-M₁ to +M₁], [-M₂ to +M₂], and [-M₃ to +M₃] are defined that respectively have, as the limit values (the lower limit values and the upper limit values) thereof, the offset values ±1σ, ±2σ, and ±3σ obtained by multiplying the statistical standard deviation σ by ±1, ±2, and ±3, respectively. However, the above proportional coefficients 1, 2, and 3 are typical examples, and in a broad sense, it is possible to use, as the first, second, and third offset values, values obtained by multiplying the standard deviation σ by any real numbers N₁, N₂, and N₃ that are larger than 0 (where N₁ < N₂ < N₃). Here, N₁, N₂, and N₃ may be either positive values or negative values. Therefore, if N₁, N₂, and N₃ are positive values, for example, it is also possible to use +N₁*σ, +N₂*σ, +N₃*σ and/or -N₁*σ, -N₂*σ, -N₃*σ as the offset values. Further, the number of the monitoring range is not limited to three, and the number thereof can be set to two, four, or the like.

For example, in the one or more embodiments described above, all signal waveform data Dcs for a single pulse laser beam LB, which has been taken into the sensor signal processing unit 22 from the infrared sensor 40 via the A/D converter 42, is stored in the data memory 54. However, the sensor signal processing unit 22 may extract signal level values D_{CS2}, D_{CS3}, and so on at respective monitoring points t₂, t₃, and so on from the signal waveform data D_{CS} for one pulse to store the extracted signal level values D_{CS2}, D_{CS3}, and so on in the data memory 54.

In the one or more embodiments described above, the infrared sensor 40 or the sensor unit 26 is incorporated in the head 18 integrally with the emission unit 24. However, it is also possible to adopt a configuration in which the infrared sensor 40 or the sensor unit 26 is arranged in the vicinity of the emission unit 24 as a unit separable or independent from the emission unit 24.

In the one or more embodiments described above, the laser welding in which the workpiece is irradiated with the pulse laser beam is described. However, the laser monitoring method or monitoring device of the present disclosure can be applied to laser welding in which a workpiece is irradiated with a CW laser beam.

The laser processing method and the laser processing device of the present disclosure are not limited to the laser spot welding, and can be applied to other laser processing accompanied by melting, for example, laser cutting, laser brazing, laser hardening, laser surface modification, and the like.

The disclosure of this application is related to the subject matter described in Japanese Patent Application No. 2019-173983 filed on September 25, 2019, the entire contents of which are incorporated herein by reference.

## Claims

1. A laser processing monitoring method of monitoring a quality of laser processing performed by irradiating a workpiece with a laser beam under a set processing condition to melt the workpiece by means of laser energy, the laser processing monitoring method comprising:
(1) receiving a radiation beam generated from a vicinity of a processing point of the workpiece during irradiation of the laser beam;
(2) generating an analog sensor output signal representing an intensity of an infrared ray in a predetermined wavelength band included in the radiation beam;
(3) converting a waveform of the sensor output signal into digital waveform data without compromising an intensity change;
(4) setting a reference waveform in advance for the sensor output signal in correspondence to the processing condition;
(5) setting, for the reference waveform, in an arbitrary section on a time axis, a first monitoring range having a first offset value as a limit value and a second monitoring range having a second offset value larger than the first offset value as a limit value;
(6) applying the first and second monitoring ranges to the waveform of the sensor output signal based on the waveform data of the sensor output signal;
(7) inspecting whether the waveform of the sensor output signal is within the first monitoring range, extending out of the first monitoring range but within the second monitoring range, or extending out of the second monitoring range; and
(8) performing at least three stages of quality determination on a quality of the laser processing based on a result of the inspection.

2. The laser processing monitoring method according to claim 1, further comprising:
determining that the laser processing is superior when the waveform of the sensor output signal is within the first monitoring range;
determining that the laser processing is good when the waveform of the sensor output signal is extending out of the first monitoring range but within the second monitoring range; and
determining that the laser processing is defective when the waveform of the sensor output signal is extending out of the second monitoring range.

3. The laser processing monitoring method according to claim 1 or 2, further comprising:
acquiring a plurality of pieces of waveform data of the sensor output signal obtained from the infrared sensor by performing laser processing under the processing condition for a plurality of times on a sample physically equivalent to the workpiece; and
defining, as the reference waveform, an average value of the waveforms of the sensor output signals by a statistical procedure based on the acquired plurality of pieces of waveform data of the sensor output signal, and using, as the first and second offset values, respective values obtained by multiplying a standard deviation with respect to the average value by real numbers N₁ and N₂ each having a different value, where N₁ = 0, N₂ ≠ 0, and an absolute value of N₁ < an absolute value of N₂.

4. A laser processing monitoring method of monitoring a quality of laser processing performed by irradiating a workpiece with a laser beam under a set processing condition to melt the workpiece by means of laser energy, the laser processing monitoring method comprising:
(1) receiving a radiation beam generated from a vicinity of a processing point of the workpiece during irradiation of the laser beam;
(2) generating an analog sensor output signal representing an intensity of an infrared ray in a predetermined wavelength band included in the radiation beam;
(3) converting a waveform of the sensor output signal into digital waveform data without compromising an intensity change;
(4) setting a reference waveform in advance for the sensor output signal in correspondence to the processing condition;
(5) setting, for the reference waveform, in an arbitrary section on a time axis, a first monitoring range having a first offset value as a limit value, a second monitoring range having a second offset value larger than the first offset value as a limit value, and a third monitoring range having a third offset value larger than the second offset value as a limit value;
(6) applying the first, second, and third monitoring ranges to the waveform of the sensor output signal based on the waveform data of the sensor output signal;
(7) inspecting whether the waveform of the sensor output signal is within the first monitoring range, extending out of the first monitoring range but within the second monitoring range, extending out of the second monitoring range but within the third monitoring range, or extending out of the third monitoring range; and
(8) performing at least four stages of quality determination on a quality of the laser processing based on a result of the inspection.

5. The laser processing monitoring method according to claim 4, further comprising:
determining that the laser processing is excellent when the waveform of the sensor output signal is within the first monitoring range;
determining that the laser processing is superior when the waveform of the sensor output signal is extending out of the first monitoring range but within the second monitoring range;
determining that the laser processing is good when the waveform of the sensor output signal is extending out of the second monitoring range but within the third monitoring range; and
determining that the laser processing is defective when the waveform of the sensor output signal is extending out of the third monitoring range.

6. The laser processing monitoring method according to claim 4 or 5, further comprising:
acquiring a plurality of pieces of waveform data of the sensor output signal obtained from the infrared sensor by performing laser processing under the processing condition for a plurality of times on a sample physically equivalent to the workpiece; and
defining, as the reference waveform, an average value of the waveforms of the sensor output signals by a statistical procedure based on the acquired plurality of pieces of waveform data of the sensor output signal, and using, as the first, second, and third offset values, respective values obtained by multiplying a standard deviation with respect to the average value by real numbers N₁, N₂, and N₃ each having a different value, where N₁ ≠ 0, N₂ ≠ 0, N₃ ≠ 0, and an absolute value of N₁ < an absolute value of N₂ < an absolute value of N₃.

7. The laser processing monitoring method according to claim 1, wherein the wavelength band includes a wavelength in which an infrared ray radiated from a melting portion of the workpiece has the highest energy density.

8. The laser processing monitoring method according to claim 7, wherein the wavelength band includes a wavelength in which infrared rays radiated from respective melting portions of a plurality types of metals have the highest energy density.

9. The laser processing monitoring method according to claim 8, wherein the wavelength band includes a band of 1550 nm to 2150 nm.

10. The laser processing monitoring method according to claim 8, wherein the wavelength band includes a band of 1300 nm to 2500 nm.

11. A laser processing monitoring device for monitoring a quality of laser processing performed by irradiating a workpiece with a laser beam under a set processing condition to melt the workpiece by means of laser energy, the laser processing monitoring device comprising:
a beam receiving unit configured to receive a radiation beam generated from a vicinity of a processing point of the workpiece during irradiation of the laser beam, photoelectrically convert an infrared ray in a predetermined wavelength band included in the radiation beam, and generate an analog sensor output signal representing an intensity of the radiation beam;
a signal processing unit configured to convert a waveform of the sensor output signal into digital waveform data without compromising an intensity change;
a reference waveform setting unit configured to set a reference waveform in advance for the sensor output signal in correspondence to the processing condition;
a monitoring range setting unit configured to set, for the reference waveform, in an arbitrary section on a time axis, at least a first monitoring range having a first offset value as a limit value, and a second monitoring range having a second offset value larger than the first offset value as a limit value;
an inspection unit configured to inspect, by applying the first and second monitoring ranges to the waveform of the sensor output signal, whether the waveform of the sensor output signal is within the first monitoring range, extending out of the first monitoring range but within the second monitoring range, or extending out of the second monitoring range; and
a determination unit configured to perform at least three stages of quality determination on a quality of the laser processing based on an inspection result obtained from the inspection unit.

12. A laser processing monitoring device for monitoring a quality of laser processing performed by irradiating a workpiece with a laser beam under a set processing condition to melt the workpiece by means of laser energy, the laser processing monitoring device comprising:
a beam receiving unit configured to receive a radiation beam generated from a vicinity of a processing point of the workpiece during irradiation of the laser beam, photoelectrically convert an infrared ray in a predetermined wavelength band included in the radiation beam, and generate an analog sensor output signal representing an intensity of the radiation beam;
a signal processing unit configured to convert a waveform of the sensor output signal into digital waveform data without compromising an intensity change;
a reference waveform setting unit configured to set a reference waveform in advance for the sensor output signal in correspondence to the processing condition;
a monitoring range setting unit configured to set, for the reference waveform, in an arbitrary section on a time axis, a first monitoring range having a first offset value as a limit value, a second monitoring range having a second offset value larger than the first offset value as a limit value, and a third monitoring range having a third offset value larger than the second offset value as a limit value;
an inspection unit configured to inspect, based on the waveform data of the sensor output signal, by applying the first, second, and third monitoring ranges to the waveform of the sensor output signal, whether the waveform of the sensor output signal is within the first monitoring range, extending out of the first monitoring range but within the second monitoring range, extending out of the second monitoring range but within the third monitoring range, or extending out of the third monitoring range; and
a determination unit configured to perform at least four stages of quality determination on a quality of the laser processing based on an inspection result obtained from the inspection unit.
